# EUROPEAN PATENT SPECIFICATION

(11) **EP 3 768 060 B1**
(45) Date of publication and mention of the grant of the patent: **10.08.2022**
(21) Application number: 19721006.5
(22) Date of filing: 18.03.2019
(51) Int. Cl.: A01B 29/04, A01B 29/06

(54) **AGRICULTURAL TILLAGE IMPLEMENT, MAINLY ROLLING BASKET**
LANDWIRTSCHAFTLICHES BODENBEARBEITUNGSGERÄT, HAUPTSÄCHLICH EIN ROLLKORB
OUTIL AGRICOLE DE TRAVAIL DU SOL, PRINCIPALEMENT PANIER ROULANT

(30) Priority: 23.03.2018 HU 800101 U
(43) Date of publication of application: 27.01.2021
(73) Proprietor: Horváth, Benedek, 6000 Kecskemét (HU)
(72) Inventor: Horváth, Benedek, 6000 Kecskemét (HU)
(74) Representative: Markó, József
(86) International application number: PCT/HU2019/050011
(87) International publication number: WO 2019/180472

(56) References cited:
- WO-A1-00/78121
- DE-U1- 7 812 988
- FR-A1- 2 586 887
- US-A1- 2014 209 337
- US-B2- 9 510 496

## Description

### TECHNICAL FIELD

This disclosure generally relates to an agricultural tillage implement, especially to a rolling basket with blades for crumbling soil, that is, for breaking up clods of soil, and which is mainly a tillage machine for tillage works after plowing and/or seedbed preparation.

### BACKGROUND ART

Such a solution is known, for example from FR2586887A or from US-9,326,439. This rolling basket has a plurality of blades disposed generally evenly spaced around a circumference de-lined by a fixed radius away from the major axis thereby forming a basket structure. The basket structure defines an inner chamber of the rolling basket. The basket structure has a plurality of openings connecting the inner chamber to the outside of the basket structure. The blades extend axially from one end of the rolling basket to an opposing end. When in use, the rolling basket is positioned on the ground so that its major axis is substantially parallel with a surface of the ground, and the blades rotate around the major axis to work the soil.

The rolling basket is connected to two support arms via bearings. The bearings are connected to the rolling basket at the ends. The bearings are configured to allow the rolling basket to rotate around its major axis. The support arm has a post configured to connect to the bearing. The bearing is configured to rotate around the post. The support ari--n also has a post configured to connect to the bearing, wherein the bearing is configured to rotate around that post. Thus, the rolling basket, which is connected to the bearings, rotates around the posts.

An internal scraper is provided to prevent the mud from pushing into the inner chamber of the rolling basket. The internal scraper is arranged in the longitudinal direction, extending radially in the inside of the basket and it is rigidly fixed. The internal scraper includes a stationary blade connected to two sleeves at each end of the stationary blade. The first sleeve receives the post. A pin can be inserted into matching openings to lock the first sleeve stationary with respect to the post.

This internal scraper operates by removing the horns adhered to the blades and extending into the interior of the rolling basket from the swiveling blades during the rotation of the basket. The blades, which have relative speed to the ground, e.g. twice the travel speed of the implement connected to the tractor - through the gaps between the blades, the detached claws are removed from the inside of the rolling basket.

The fundamental shortcoming of the above solution is - according to our practical experiences - that the internal scraper is too far away from the blades (approx. 8-10 cm), so that on the one hand too large nuggets can be formed, and on the other hand, due to the rigid connection between the blades and the internal scraper, stones, pieces of wood, plant remains, etc. they can get caught in the gap between the internal scraper and the blades, causing a forced stop of the rolling basket and the inability to work.

A further problem is that, due to the excessive distance between the internal scraper and the blade cooperating with it, the blade cannot eject the ground or other solid object penetrated into the interior of the rolling basket, and thus the rotation of the basket is stopped and its operation is impossible any more. In this case, the operator must remove the jammed clod, stone or piece of wood from the rolling basket which results in tiring manual work and significant downtime.

In the above solution, the internal scraper must be arranged relatively far from the blades to reduce the possibility of insertion (clogging) of solid objects. However, due to the rigid connection of the blades in the rolling basket, the clogging of solid objects and the softer ground cannot be eliminated, in practice, in such a way, that enables continuous operation of the agricultural tillage implement.

### SUMMARY OF INVENTION

It is a main object of the present invention to overcome the above-mentioned disadvantages, i.e. to provide an improved agricultural tillage implement, mainly rotating basket with more efficient and higher operational safety for plowing and seedbed tasks.

Our further aim is to improve the self-cleaning ability of the rolling basket.

The object of the present invention is solved by the invention as defined in the enclosed claims.

According to the present invention, these problems are eliminated by the proposed measures, these are, on the one hand, the internal scraper is placed radially much closer to the blades, i.e., the spacing between them has been significantly reduced according to the invention. On the other hand, an elastic connection is provided at least one end or both ends of the internal scraper. According to the present invention elastic elements, preferably C-springs, provide a flexible connection for the internal scraper. As a result, nail, stone, brick, wood, etc. cannot get caught between the internal scraper and the blade, so that no blockage due to insertion can occur, and much smaller nuggets are created, than in the known solution.

Another advantageous effect is that in the case of soft soil, inside the rolling basket, a thin walled soil "tubing" is formed which is pushed into the interior of the basket by rolling down the basket on the ground, from which the centrifugal force is pulled out through the openings into the free space outside the rolling basket.

So the present invention is an agricultural tillage implement, mainly rolling basket for tillage works after plowing and/or seedbed preparation. This rolling basket comprises a basket structure including a plurality of coaxial discs associated with longitudinal crushing blades extending from one end to an opposing end along a major axis of the basket structure. The crushing blades define an inner space of the basket structure, and said inner space being accessible through openings provided between the crushing blades. The basket structure is configured in such a way to rotate around the major axis. Furthermore, the rolling basket comprises a stationary internal scraper arranged in the inner chamber of the basket structure at a distance from the crushing blades.

The essence of the invention lies in that the stationary internal scraper arranged in the inner space of the basket structure of the rolling basket in cooperation with one of the crushing blades so that the radial distance between the radially inner edge of the blades and the radially outer edge of the scraper has been significantly reduced, preferably at most to 2.5 cm. On the other hand, in the inner space of the basket structure of the rolling basket, at least one end, but preferably both ends of the stationary internal scraper is/are connected to stationary shaft pin(s) of the rotary basket via an elastic member.

The elastic member is formed as a flexible, mainly C-shaped spring allowing flexible rotation and/or radial displacement of the internal scraper in the inner space of the rolling basket, when jamming a larger clump or a piece of stone or wood between the scraper and the cooperating blade.

In a preferred embodiment, a support beam for the rolling basket is provided that can be hinged and upwardly displaceable to the frame of a tillage implement, in particular to a hinged or towed structure. It comprises bearing legs fixed to the ends of the support beam. Each bearing leg is provided with one of the shaft pins extending into the inner space of the basket structure of the rolling basket, so these coaxial shaft pins form a rotational centre line (major axis) for free rotation of the rolling basket.

Thus, the invention relates to a crushing rolling basket, in particular for plowing and/or seedbed production, having coaxial discs and associated longitudinal blades, which together form a "basket structure", which is freely rotatable about the shaft pins. In the interior of the basket structure, a stationary internal scraper is provided in connection (cooperation) with the rotating blades. The improvement according to the present invention lies, in that, in the inner space of the rolling basket, the internal scraper is arranged in such a way, that the scraper cooperates with one of the blades at significantly reduced radial distance between the radially inner edge of the blades and the radially outer edge of the scraper, preferably this distance should be max. 2.5 cm. Furthermore, in the interior of the rolling basket, at least one of the ends of the internal scraper is/are connected to the stationary shaft pin(s) of the rotary basket by means of a flexible element.

### BRIEF DESCRIPTION OF DRAWINGS

The invention will be described in more detail with reference to the accompanying drawings, in which an exemplary embodiment of the present invention is shown. In the drawing:
- FIG. 1 illustrates a perspective view of an embodiment of an agricultural tillage machine equipped with rolling baskets according to the invention;
- FIG. 2 illustrates a separate perspective view of the rolling basket of Fig. 1;
- FIG. 3 illustrates a longitudinal cross-sectional view of the end portion of the rolling basket of Figure 2, on a relatively larger scale;
- FIG. 4 is a cross-sectional view taken along line IV-IV in Figure 3.

### DESCRIPTION OF EMBODIMENT

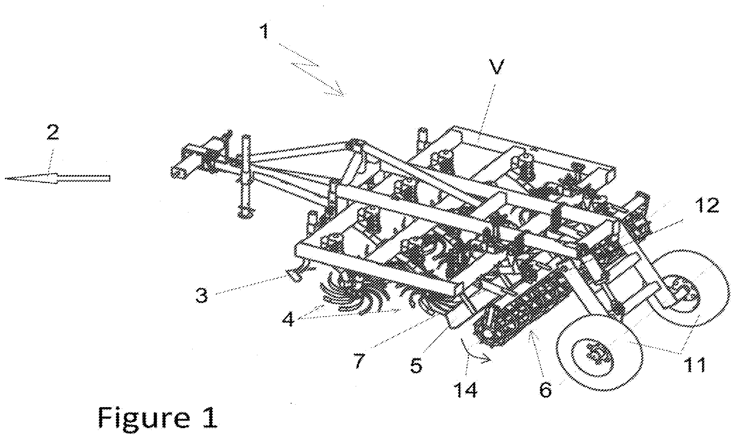

According to Fig. 1, an agricultural tillage implement 1, e.g. for seedbed preparation works, can be connected, e.g. to a tractor (not shown). The travel direction of the implement 1 is indicated by an arrow 2. The implement 1 has a frame V, provided with cultivating units, for example, looking in the direction of the arrow 2, in the front row, with goose foot hoes 3, behind which with rotary hoes 4 arranged in the next two rows, and the row behind them is equipped with levellers 5. In the last row of the frame V there are three pieces of rolling baskets 6 according to the invention arranged coaxially in this case.

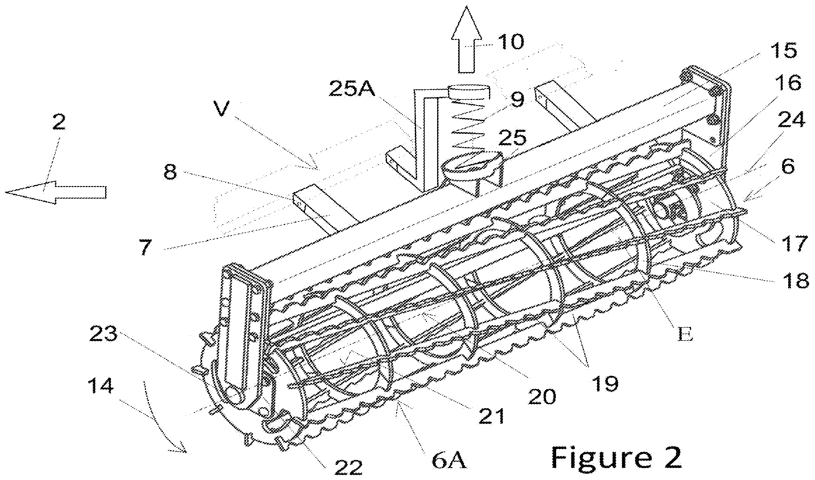

The rolling baskets 6 are hingedly connected to the frame V of the implement 1 by means of brackets 7. Figures 1 and 2 show that the rolling baskets 6 according to the invention are pivotally rotatable arranged about pins 8 through the brackets 7, so that the rolling baskets 6 are arranged to be displaced in the vertical direction indicated by arrow 10 against springs 9 (Fig. 2). The spring 9 sits on a lower spring plate 25 and its upper end is connected to an articulated spring arm 25A (Fig. 2).

Fig. 1 shows that the frame V of the implement 1 is equipped with wheels 11, which can be hydraulically tilted to the working position around pins 12, i.e. they can be lifted. The wheels 11 of the implement 1 is thus in elevated position, i.e. in the air, in the working state, in which case the entire implement 1 is in fact supported vertically on the rolling baskets 6. These rolling baskets 6 work on a soil surface 13 to be cultivated by rolling down thereon in the direction of an arrow 14, to perform soil crushing and compacting work (Fig. 1).

Fig. 2 shows in more detail an exemplary embodiment of the rolling basket 6 according to the invention. As indicated herein, the rolling basket 6 has a longitudinal support beam 15, with double-sided bearing legs 16 attached thereto. The support beam 15 is coupled to the frame V with hinged brackets 7 and the springs 9. In fact, each rolling basket 6 consists of double-sided end discs 17, intermediate discs 18 and longitudinal crushing blades 19 spaced apart from each other along the circumference of the discs 17 and 18. The blades 19 define an inner space 20 of the rolling bracket 6 from the outside, and this inner space 20 can communicate with the outer air space through openings 21 formed between the blades 19.

Each rolling basket 6 comprises a basket structure 6A including the plurality of coaxial discs 17 and 18 associated with the longitudinal crushing blades 19 extending from one end to an opposing end along a major axis (rotational centre line) 24 of the basket structure 6A of the rolling basket 6. The crushing blades 19 define an inner space 20 of the basket structure 6A of the rolling basket 6, and said inner space 20 being accessible through openings 21 provided between the crushing blades 19.

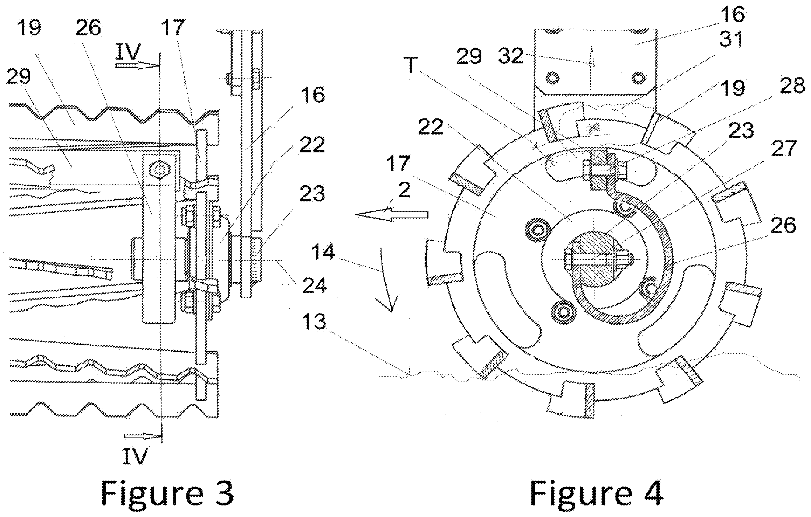

It is more evident on the basis of Figures 3 and 4, those bearing housings 22 are secured to the two end discs 17 of the rolling basket 6. In these bearing housings 22 known bearings (not shown) are arranged. In each bearing, a shaft pin 23 is embedded, extending into the inner space 20 of the rolling basket 6. The two shaft pins 23 are coaxially arranged and secured to the bearing legs 16, preferably by welding. Thus, the two shaft pins 23 on both sides of the bearing legs 16 extend axially into the inner space 20 of the rolling basket 6 to form the rotational centre line 24 for the rolling basket 6. In the present case, the bearing housings 22 of the two shaft pins 23 are fastened to the end discs 17 of the rolling basket 6 by screws. Thus, the rolling basket 6 is freely rotatable about the coaxial shaft pins 23 and the rotatational centre line 24.

According to the invention, at least one of the shaft pin 23 of the rolling basket 6, fixed to the bearing leg 16 is provided with an elastic member 26, preferably an inverted C-shaped spring. The radially inner end of the elastic member 26 is fixed to the end of the shaft pin 23 by means of a screw 27. The radially outer end of the elastic element 26 is attached to the end of an internal scraper 29 e.g. by a screw 28 (FIG. 4), which scraper 29 is arranged in a longitudinal direction and radially between the two end discs 17 in the inner space 20 of the rolling basket 6,

It should be emphasized that according to the invention, a distance (spacing) T between the radially outer edge of the internal scraper 29 and the radially inner edge of the working crushing blade 19 is intentionally chosen to be relatively small, preferably up to 2.5 cm. Due to the reduced size of the distance T, the arrangement according to the invention cannot produce larger nuggets, according to our field experiments, and as a consequence, the self-cleaning feature of the proposed rolling basket 6 has been highly improved.

As shown in FIG. 2, the crushing blades 19 are arranged slightly oblique at the circumference of the rolling basket 6, in this case, at a small angle E along the circumference. The angle E can be, preferably between 5 and 10 degrees.

During operation, the automatic and improved internal self-cleaning of the rolling baskets 6 according to the present invention is accomplished (Fig, 1) being driven in the direction of travel indicated by the arrow 1 by means of a forced connection of the rolling baskets 6 with the soil surface 13. (Fig. 4), As a result, the crushing blades 19 of the rotating basket 6 rotate in the direction of the arrow 14, passing the internal scraper 29 at a distance T, and then a piece of soil 31 (which is indicated with a thin line in FIG. 4) will be forced to move outwardly from the inner space 20 of the rolling basket 6 through the openings 21 between the crushing blades 19, i.e. it is ejected (shown by arrow 32 in FIG. 4).

Even if a larger soil piece, brick, stone, or any other hard object enters between the crushing blades 19 and/or between the crushing blade 19 and the internal scraper 29, a jam may not occur because the flexible elastic member 26 allows the internal scraper 29 to rotate flexibly or to perform a flexible displacement towards the inside of the rotating basket 6. The safety, economy and self-cleaning capability of the rotating basket 6 have been surprisingly improved with these measures of the invention.

### LIST OF REFERENCE CHARACTERS

- 1: - Agricultural tillage implement
- 2: - Arrow
- 3: -Goose foot hoe
- 4: - Rotary hoe cultivating unit
- 5: - Leveller
- 6: - Rotating basket
- 6A: -Basket structure
- 7: - Bracket
- 8: - Pin
- 9: - Spring
- 10: - Arrow
- 11: - Wheel
- 12: - Pin
- 13: - Soil surface (to be cultivated)
- 14: - Arrow
- 15: - Support beam
- 16: - Bearing leg
- 17: - End disc
- 18: - Intermediate disc
- 19: - Crushing blade
- 20: - Inner space
- 21: - Opening
- 22: - Bearing housing
- 23: - Shaft pin
- 24: - Rotational centre line (major axis)
- 25: - Lower spring plate
- 25A: - Spring arm
- 26: - Elastic member
- 27: - Screw
- 28: - Screw
- 29: - Internal scraper
- 30: - Arrow
- 31: - Piece of soil
- 32: - Arrow
- V: - Frame
- E: - Angle

## Claims

1. An agricultural tillage implement with a rolling basket for tillage works after plowing and/or seedbed preparation, said rolling basket comprising a basket structure including a plurality of coaxial discs associated longitudinal crushing blades extending from one end to an opposing end along a major axis of the basket structure, wherein the crushing blades define an inner space of the basket structure, and said inner space being accessible through openings provided between the crushing blades, and the basket structure configured to rotate around a major axis, and comprising a stationary internal scraper arranged in the inner space of the basket structure at a distance from the crushing blades, **characterized in that** the a stationary internal scraper (29) arranged in the inner space (20) of the basket structure (6A) of the rolling basket (6) radially and in cooperation with the radial crushing blades (19) so that the radial distance (T) between the radially inner edge of the blade(s) (19) and the radially outer edge of the scraper (29) is reduced, at most to 2.5 cm, and that in the inner space (20) of the basket structure (6A) of the rolling basket (6), at least one end, mainly both ends of the stationary internal scraper (29) is/are connected to stationary shaft pin(s) (23) of the rotary basket (6) via an elastic member (26), wherein the elastic member (26) is formed as a flexible, mainly C-shaped spring allowing flexible rotation and/or radial displacement of the internal scraper (29) in the inner space (20) of the rolling basket (6), when jamming a larger clump or a piece of stone or wood between the scraper (29) and the cooperating blade (19).

2. The agricultural tillage implement according to Claim 1, **characterized in that** a support beam (15) for the rolling basket (6) is provided that can be hinged and upwardly displaceable to the frame (V) of a tillage implement (1), in particular to a hinged or towed structure, and that comprising bearing legs (16) fixed to the ends of the support beam (15), and each bearing leg (16) is provided with one of the shaft pins (23) extending into the inner space (20) of the basket structure (6A) of the rolling basket (6), these coaxial shaft pins (23) form a rotational center line (24) for free rotation of the rolling basket (6).

## Patentansprüche

1. Landwirtschaftliches Bodenbearbeitungsgerät mit einem Rollkorb für Bodenbearbeitungsarbeiten nach Pflügen und/oder Saatbettbereitung, wobei der Rollkorb einen Walzenkörper umfasst, die eine Vielzahl von koaxialen Scheiben umfasst, denen Zerkleinerungsstäbe zugeordnet sind, die sich von einem Ende zu einem gegenüberliegenden Ende entlang einer Hauptachse des Walzenkörpers erstrecken, wobei die Zerkleinerungsstäbe einen Innenraum des Walzenkörpers definieren und der Innenraum durch Öffnungen zugänglich ist, die zwischen den Zerkleinerungsstäbe vorgesehen sind, und der Walzenkörper so angeordnet ist, dass er sich um die Hauptachse dreht, und einen stationären inneren Abstreifer umfasst, der im Innenraum des Walzenkörpers von den Zerkleinerungsstäben beabstandet angeordnet ist, **dadurch gekennzeichnet, dass** der im Innenraum (20) des Walzenkörpers (6A) des Walzenkorbs (6) der stationäre Abstreifer (29) radial und im Zusammenwirken mit den radialen Zerkleinerungsstäbe (19) so angeordnet ist, dass der radiale Abstand (T) zwischen der radial inneren Kante der Zerkleinerungsstäbe (19) und der radial äußere Rand des Abstreifers (29) reduziert, höchstens auf 2,5 cm ist, und dass im Innenraum (20) des Walzenkörpers (6A) des Rollkorbs (6), mindestens ein Ende, hauptsächlich beide Enden des stationären Abstreifers (29) über ein elastisches Element (26) mit einem stationären Wellenzapfen (23) des Rollkorbs (6) verbunden ist/sind, wobei das elastische Element (26) als flexible, hauptsächlich C-förmige Feder ausgebildet ist, die eine flexible Drehung und/oder radiale Verschiebung des Abstreifers (29) im Innenraum (20) des Rollkorbs (6) beim Verklemmen eines größeren Klumpens oder Steins oder Holzstücks zwischen dem Abstreifer (29) und der zusammenwirkenden Zerkleinerungsstab (19) ermöglicht.

2. Landwirtschaftliches Bodenbearbeitungsgerät nach Anspruch 1, **dadurch gekennzeichnet, dass** ein Tragbalken (15) für den Rollkorb (6) vorgesehen ist, der an einem schwenkbaren oder geschleppten Gerät, insbesondere an einem Rahmen (V) des Bodenbearbeitungsgerätes (1) angelenkt und nach oben flexibel verschiebbar angeordnet ist, und dass Lagerbeine (16) umfasst, die an beiden Enden des Tragbalkens (15) befestigt sind, wobei jedes Lagerbein (16) mit je einem Wellenstift (23) versehen ist, die sich in den Innenraum (20) des Walzenkörpers (6A) des Rollkorbs (6) erstrecken und diese koaxialen Wellenstifte (23) eine Rotationsmittellinie (24) zur freien Drehung des Rollkorbs (6) bilden.

## Revendications

1. Outil agricole de travail du sol comportant un panier roulant pour travailler le sol après labourage et/ou après préparation du lit de semence, ledit panier roulant comprenant un corps de rouleau qui comprend un grand nombre de disques coaxiaux associés à des lames de broyage longitudinales s'étendant d'une extrémité à une extrémité opposée le long d'un axe principal du corps de rouleau, les lames de broyage définissant un espace interne du corps de rouleau, et ledit espace interne étant accessible au travers d'orifices pourvus entre les lames de broyage, et le corps de rouleau est configuré pour tourner autour d'un axe principal et comprend un racloir interne stationnaire disposé dans l'espace interne du corps de rouleau à une certaine distance des lames de broyage, ***caractérisé en ce que*** le racloir (29) interne stationnaire est disposé radialement dans l'espace interne (20) du corps de rouleau (6A) du panier roulant (6) et coopère avec les lames de broyage (19) radiales de telle sorte que la distance radiale (T) entre l'arête radialement interne de la lame/ des lames (19) et l'arête radialement externe du racloir (29) est réduite et est d'au moins 2,5 cm, et que dans l'espace interne (20) du corps de rouleau (6A) du panier roulant (6) au moins une extrémité, principalement les deux extrémités du racloir (29) interne stationnaire est/sont reliée(s) au(x) tourillon(s) d'arbre (23) stationnaire(s) du panier roulant (6) par un élément élastique (26), ledit élément élastique (26) se présentant sous la forme d'un ressort flexible principalement en forme de C permettant la rotation et/ou le déplacement radial flexible du racloir (29) interne dans l'espace interne (20) du panier roulant (6) lors du coincement d'un amas de plus grande taille ou d'un morceau de pierre ou de bois entre le racloir (29) et la lame (19) coopérante.

2. Outil agricole de travail du sol selon la revendication 1, ***caractérisé en ce qu'est*** prévue une poutre de support (15) pour le panier roulant (6) pouvant être articulée et se déplacer vers le haut par rapport au bâti (V) d'un outil de travail du sol (1), en particulier par rapport à une structure articulée ou tractée, et comprenant des montants de roulement (16) fixés aux extrémités de la poutre de support (15), chaque montant de roulement (16) étant muni de l'un des tourillons d'arbre (23) se prolongeant dans l'espace interne (20) du corps de rouleau (6A) du panier roulant (6), lesdits tourillons d'arbre (23) coaxiaux formant une ligne médiane de rotation (24) pour la rotation libre du panier roulant (6).
